# EUROPÄISCHE PATENTSCHRIFT

(11) **EP 3 302 848 B1**
(45) Veröffentlichungstag und Bekanntmachung des Hinweises auf die Patenterteilung: **26.07.2023**
(21) Anmeldenummer: 15737975.1
(22) Anmeldetag: 03.06.2015
(51) Int. Cl.: B21J 15/04, F16B 19/10

(54) **VERFAHREN UND FÜGEELEMENT ZUM FÜGEN WENIGSTENS ZWEIER BAUTEILE MITTELS EINER FLIESSFORMNIETHÜLSE**
METHOD AND JOINING ELEMENT FOR JOINING AT LEAST TWO COMPONENTS BY MEANS OF A FLOWABLE RIVET SLEEVE
PROCÉDÉ ET ÉLÉMENT D'ASSEMBLAGE DESTINÉ À ASSEMBLER AU MOINS DEUX ÉLÉMENTS AU MOYEN D'UNE DOUILLE DE RIVET FLUABLE

(43) Veröffentlichungstag der Anmeldung: 11.04.2018
(73) Patentinhaber: WS Wieländer + Schill Professionelle Karosserie- Spezialwerkzeuge GmbH & Co. KG, 78609 Tuningen (DE)
(72) Erfinder: GRIMALDI, Vincenzo, 70378 Stuttgart (DE); REITZIG, Klaus, 58579 Schalksmühle (DE)
(74) Vertreter: Friderichs, Gunther
(86) Internationale Anmeldenummer: PCT/EP2015/001134
(87) Internationale Veröffentlichungsnummer: WO 2016/192742

(56) Entgegenhaltungen:
- DE-A1-102006 019 156
- DE-A1-102013 020 801
- DE-U1- 29 716 899
- GB-A- 2 200 422
- GB-A- 2 330 390
- US-A- 2 030 165
- US-A- 4 447 944
- US-A- 4 810 142

## Beschreibung

Die Erfindung betrifft ein Verfahren zum Fügen wenigstens zweier Bauteile, insbesondere zweier Blechteile einer Fahrzeugkarosserie, gemäß dem Oberbegriff von Patentanspruch 1 sowie ein Fügeelement zum Fügen wenigstens zweier Bauteile, insbesondere zweier Blechteile einer Fahrzeugkarosserie, gemäß dem Oberbegriff von Patentanspruch 5.

Ein derartiges Verfahren und ein solches Fügeelement sind beispielsweise bereits der DE 10 2007 058 393 A1 als bekannt zu entnehmen. Bei dem dortigen Verfahren zum Fügen von zumindest zwei Bauteilen wird eine in einer Durchbrechung der Bauteile angeordnete Niethülse, insbesondere ein Blindniet, durch Eintreiben eines Fügedorns in eine Öffnung der Niethülse zumindest abschnittsweise derart verformt, dass eine formschlüssige Nietverbindung der beiden Bauteile erzeugt wird. Um auch hochfeste Nietverbindung erzeugen zu können, ist es im dortigen Verfahren vorgesehen, dass der in die Öffnung der Niethülse eingeführte Fügedorn eine eine Relativbewegung zwischen dem Fügedorn und der Niethülse verursachende Rotationsbewegung ausführt.

Derartige Fügeverfahren ermöglichen das Fügen jeweiliger Bauteile auch bei lediglich einseitiger Zugänglichkeit nur eines der Bauteile, wobei das andere Bauteil verdeckt ist. Die durch ein derartiges Verfahren beziehungsweise derartige Blindniete gefügten Bauteile sind nach dem Fügeprozess hochfest miteinander verbunden, jedoch benötigen die fixierten Niete verfahrensbedingt einen großen Bauraum, weil sie üblicherweise einen stabilen und besonders dick auftragenden Flansch beziehungsweise Setzund Schließkopf aufweisen, mittels welchem sie an zumindest einem der Bauteile angelegt werden. Der Flansch weist deshalb einen erhöhten Platzbedarf auf, da er stabil genug sein muss, um den Umformkräften zu widerstehen.

Das Dokument US 4,447,944 A zeigt ein Verfahren zum Verbinden von faserverstärkten Kunststofflaminaten mit Blechen, bei welchem eine Hülse verwendet wird, die beidseitig aufgeweitet wird.

Der Oberbegriff der Ansprüche 1 und 5 basiert auf US 4,810,142 A.

Aufgabe der vorliegenden Erfindung ist es , ein Verfahren sowie ein Fügeelement der eingangs genannten Art zu schaffen, mittels welchen jeweilige Bauteile unter besonders geringem Platzbedarf hochfest gefügt werden können.

Diese Aufgabe wird erfindungsgemäß durch ein Verfahren mit den Merkmalen des Patentanspruchs 1 sowie durch ein Fügeelement mit den Merkmalen des Patentanspruchs 5 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Fügen wenigstens zweier Bauteile, insbesondere zweier Blechbauteile einer Fahrzeugkarosserie, mittels einer einen Mantelbereich, einen ersten Randbereich und einen zweiten Randbereich umfassenden Fließformniethülse, in welche ein einen Grundkörper und einen Kopf umfassender Zugschaft einführbar ist. Ferner wird die Fließformniethülse in jeweilige, zumindest im Wesentlichen miteinander fluchtende Durchgangsöffnungen der Bauteile eingeschoben, wonach durch eine Relativbewegung des Zugschafts zu der Fließformniethülse die Fließformniethülse im ersten Randbereich aufgeweitet und mit einem der Bauteile in Anlage gebracht wird.

Um nun die Bauteile hochfest und unter besonderes geringem Platzbedarf fügen zu können, ist es vorgesehen, dass der zweite Randbereich mittels eines den Zugschaft umgebenden Umformwerkzeugs, welches auch als Setzwerkzeug bezeichnet wird, zum anderen Bauteil hin umgebogen und mit dem anderen Bauteil in Anlage gebracht wird.

Demzufolge wird also zusätzlich zu dem ersten Randbereich, welcher bei dem Verfahren aufgeweitet wird, auch der zweite Randbereich der Fließformniethülse plastisch verformt und an das andere Bauteil angelegt. Anders als aus manchem Stand der Technik bekannt, weist die Fließformniethülse also keinen vergleichsweise massiven Flansch beziehungsweise Setz- und Schließkopf auf, welcher üblicherweise derart dimensioniert ist, dass er den Umformkräften bei einem gewöhnlichen Fügeprozess Widerstand leistet, sondern es werden stattdessen beide einander gegenüberliegende Seiten, also beide Randbereiche der Fließformniethülse bei dem Verfahren verformt. Bei diesem Verfahren wird eine die Fließformniethülse verformende Kraft derart in die Fließformniethülse eingeleitet, dass sowohl der erste Randbereich aufgeweitet, als auch der zweite Randbereich, welcher, wie bereits erwähnt, dem ersten Randbereich gegenüberliegt, zum anderen Bauteil hin umgebogen wird. Durch die Verformung beider Randbereiche ist es daher nicht erforderlich, dass einer der Randbereiche der Krafteinleitung durch das Umformwerkzeug widersteht und lediglich der andere Randbereich verformt wird.

Durch Aufweiten und Umformen des ersten Randbereichs wird aus dem ersten Randbereich beispielsweise ein sogenannter Setzkopf gebildet beziehungsweise der erste Randbereich wird in einen sogenannten Setzkopf umgeformt. Durch das Umformen des zweiten Randbereichs beziehungsweise dessen Umbiegen hin zum anderen Bauteil wird aus dem zweiten Randbereich ein sogenannter Schließkopf gebildet beziehungsweise der zweite Randbereich wird in einen sogenannten Schließkopf umgeformt. Der durch das erfindungsgemäße Verfahren geformte Schließkopf ist gegenüber dem Setzkopf angeordnet und ist wie der Setzkopf Bestandteil der einen Niet darstellenden Fließformniethülse, der beziehungsweise die zum Beispiel beim Fügen einer Fahrzeugkarosserie, also beim Fügen von Blechen eines Fahrzeugdaches eingesetzt wird. Der durch dieses Verfahren geformte Schließkopf weist beispielsweise eine Aufbauhöhe von maximal 1 Millimeter auf, wohingegen eine nach manchen konventionellen Verfahren hergestellte Nietverbindung Niete mit einer jeweiligen Aufbauhöhe des Setzkopfes von bis zu 3 Millimeter aufweisen würde. Ferner ist es mittels des erfindungsgemäßen Verfahrens möglich, den Setzkopf mit einer Aufbauhöhe von beispielsweise 2,5 Millimeter auszugestalten, während bei manchen konventionellen Verfahren der Schließkopf 8 Millimeter aufweisen würde.

Somit kann der Bauraumbedarf der umgeformten Fließformniethülse besonders gering gehalten werden.

Durch das Umformen sowohl des ersten Randbereichs als auch des zweiten Randbereichs wird also im besonderen Maße Bauraum eingespart, da die Aufbauhöhe sowohl des Setzkopfes als auch des Schließkopfes im Vergleich zu bereits bekannten Verfahren deutlich reduziert werden kann.

Um die Bauteile besonders fest miteinander zu verbinden und dabei gleichzeitig den Bauraumbedarf besonders gering zu halten, ist es gemäß der Erfindung vorgesehen, dass der Kopf des Zugschafts wenigstens eine Ausnehmung aufweist, welche beim Fügen verdrängtes Material der Fließformniethülse aufnimmt.

Mit anderen Worten kommt es beim Fügen der Bauteile zu einer Materialverdrängung. Dies bedeutet, dass Material zumindest der Fließformniethülse durch das Fügen verdrängt wird. Das verdrängte Material kann nun in die Ausnehmung des Kopfes einfließen. Hierdurch wirkt der Kopf mit dem in die Ausnehmung eingeflossenen beziehungsweise verdrängten Material formschlüssig zusammen, so dass der Kopf, welcher nach dem Fügen an der Fließformniethülse, insbesondere in der Fließformniethülse, und den Bauteilen verbleibt, gegen Verlieren gesichert ist.

Mit anderen Worten, dadurch, dass verdrängtes Material in die Ausnehmung des Kopfes fließt, kann die Gefahr, dass sich der Kopf von der Fließformniethülse und den Bauteilen löst, besonders gering gehalten werden.

Weiterhin ist es vorgesehen, dass der Zugschaft, in dessen axialer Richtung, zwischen dem Kopf und dem Grundkörper eine Sollbruchstelle umfasst. Beim Fügen wird der Grundkörper an der Sollbruchstelle gezielt von dem Kopf getrennt, indem der Grundkörper beispielsweise gezielt an der Sollbruchstelle vom Kopf abreißt und/oder abbricht und/oder auf anderweitige Weise versagt. Der durch die Relativbewegung zwischen dem Zugschaft und der Fließformniethülse zumindest teilweise in die Fließformniethülse bewegte und somit zumindest teilweise in der Fließformniethülse aufgenommene Kopf des Zugschafts verbleibt somit an der Fließformniethülse und den Bauteilen und kann beispielsweise durch das in die Ausnehmung geflossene Material gegen Verlieren gesichert werden. Der Grundkörper jedoch wird gezielt an der Sollbruchstelle von dem Kopf getrennt und somit von dem Kopf, der Fließformniethülse und den Bauteilen entfernt, so dass der Bauraumbedarf und das Gewicht der fertigen Verbindung besonders gering gehalten werden können.

Die Sollbruchstelle ist beispielsweise durch eine lokale Schwächung gebildet, wobei der Zugschaft beispielsweise an der Sollbruchstelle eine geringere Dicke, insbesondere Wanddicke, als den sich daran anschließenden Bereichen des Zugschafts aufweist, wobei sich diese Bereiche beispielsweise in axialer Richtung beidseitig an die Sollbruchstelle anschließen.

In vorteilhafter Ausgestaltung der Erfindung weist der Grundkörper des Zugschafts wenigstens ein Formschlusselement auf, über welches das Umformwerkzeug, mittels welchem die Relativbewegung des Zugschafts zu der Fließformniethülse bewirkt wird, zumindest beim Bewirken der Relativbewegung formschlüssig mit dem Zugschaft zusammenwirkt. Dadurch kann bei dem erfindungsgemäßen Verfahren eine besonders vorteilhafte Übertragung von Kräften, insbesondere Zugkräften, von dem Umformwerkzeug auf den Zugschaft, insbesondere den Grundkörper, erfolgen. Das Umformwerkzeug wird auch als Setzwerkzeug bezeichnet, da es genutzt wird, den Zugschaft relativ zur Fließformniethülse zu bewegen, insbesondere translatorisch zu bewegen, um dadurch die Fließformniethülse umzuformen, insbesondere den ersten Randbereich aufzuweiten. Dieses Bewegen des Zugschaftes und das Umformen der Fließformniethülse sowie das dadurch bewirkte Fügen der Bauteile wird auch als Setzen der Fließformniethülse bezeichnet. Die vorteilhafte Übertragung von Kräften, insbesondere von dem Umformwerkzeug auf den Zugschaft, erfolgt über das wenigstens eine Formschlusselement des Grundkörpers, so dass das Umformwerkzeug über das Formschlusselement des Grundkörper zumindest beim Bewegen des Zugschaftes formschlüssig mit dem Grundkörper und somit dem Zugschaft insgesamt zusammenwirkt. Durch dieses formschlüssige Zusammenwirken können beispielsweise Zugkräfte von dem Umformwerkzeug auf den Zugschaft übertragen werden, so dass der Zugschaft mittels des Umformwerkzeugs translatorisch derart bewegt wird, dass der Kopf des Zugschafts, welcher beispielsweise zunächst aus der Fließformniethülse herausragt, zumindest teilweise in die Fließformniethülse bewegt, insbesondere gezogen, wird, wodurch die Fließformniethülse umgeformt, insbesondere der erste Randbereich aufgeweitet, wird.

Durch das formschlüssige Zusammenwirken des Umformwerkzeugs mit dem Zugschaft können auch besonders hohe Zugkräfte übertragen werden, so dass die Fließformniethülse mittels des Zugschaftes, insbesondere mittels des Kopfes, besonders vorteilhaft umgeformt werden kann. Dadurch können die Bauteile besonders fest miteinander verbunden werden. Außerdem können infolge des formschlüssigen Zusammenwirkens unerwünschte Relativbewegungen zwischen dem Zugschaft und dem Umformwerkzeug vermieden werden, so dass der Zugschaft definiert und gezielt bewegt und positioniert werden kann. Dadurch kann eine besonders feste Verbindung der Bauteile gewährleistet werden. Insbesondere ist es möglich, den Kopf gezielt und definiert zumindest teilweise in der Fließformniethülse zu positionieren, so dass der Kopf beispielsweise nach dem Fügen der Bauteile in der Fließformniethülse verbleibt.

Zur Realisierung des formschlüssigen Zusammenwirkens weist beispielsweise das Umformwerkzeug wenigstens ein mit dem Formschlusselement des Grundkörpers korrespondierendes, weiteres Formschlusselement auf, welches zumindest beim Bewirken der Relativbewegung zwischen dem Zugschaft und der Fließformniethülse formschlüssig mit dem wenigstens einen ersten Formschlusselement des Grundkörpers zusammenwirkt.

Eine weitere Ausführungsform zeichnet sich dadurch aus, dass jeweilige Durchmesser, insbesondere Außendurchmesser, der Randbereiche bei der Relativbewegung vergrößert werden.

Hierdurch kann insbesondere der Bauraumbedarf in axialer Richtung der Fließformniethülse beziehungsweise des Zugschaftes gering gehalten werden.

Die zuvor genannte axiale Richtung der Fließformniethülse und des Zugschafts fällt beispielsweise mit der Richtung zusammen, in die der Zugschaft relativ zur Fließformniethülse mittels des Umformwerkzeugs bewegt wird.

Schließlich hat es sich zur Realisierung einer besonders festen Verbindung der Bauteile als vorteilhaft gezeigt, wenn der Mantelbereich als Konus beziehungsweise konisch ausgebildet ist und infolge der Relativbewegung zu einem Zylinder beziehungsweise zylindrisch verformt wird.

Ein zweiter Aspekt der Erfindung betrifft ein Fügeelement zum Fügen wenigstens zweier Bauteile, insbesondere zweier Blechbauteile einer Fahrzeugkarosserie. Das Fügeelement umfasst eine Fließformniethülse, welche einen Mantelbereich, einen ersten Randbereich und einen zweiten Randbereich aufweist. Ferner umfasst das Fügeelement einen in die Fließformniethülse eingeführten und somit zumindest teilweise in der Fließformniethülse aufgenommenen, einen Grundkörper und einen Kopf umfassenden Zugschaft. Dabei ist die Fließformniethülse in jeweilige, zumindest im Wesentlichen miteinander fluchtende Durchgangsöffnungen der Bauteile einschiebbar, wonach durch eine Relativbewegung des Zugschafts zu der Fließformniethülse die Fließformniethülse im ersten Randbereich aufweitbar und an eines der Bauteile anlegbar ist.

Um nun die Bauteile hochfest unter nur geringem Platzbedarf miteinander verbinden zu können, ist es erfindungsgemäß vorgesehen, dass der zweite Randbereich mittels eines den Zugschaft umgebenden Umformwerkzeugs zum anderen Bauteil hin umbiegbar und an das andere Bauteil anlegbar ist. Vorteilhafte Ausgestaltungen des ersten Aspekt der Erfindung sind als vorteilhafte Ausgestaltungen des zweiten Aspekt der Erfindung anzusehen und umgekehrt. Dies bedeutet, dass das erfindungsgemäße Fügeelement zum Durchführen des erfindungsgemäßen Verfahrens ausgebildet ist. Die Fließformniethülse und der Zugschaft bilden somit das Fügeelement, welches zum hochfesten und platzsparenden Fügen beziehungsweise Verbinden der Bauteile genutzt wird.

Um die Bauteile besonders fest und platzsparend miteinander zu verbinden, ist es vorgesehen, dass der Kopf des Zugschafts wenigstens eine Ausnehmung zum Aufnehmen von beim Fügen verdrängtem Material aufweist. Bei diesem verdrängten Material kann es sich um Material wenigstens eines der Bauteile und/oder um Material der Fließformniethülse handeln, wobei das verdrängte Material in die Ausnehmung einfließen kann. Hierdurch ist es auch möglich, ein Verlieren des beispielsweise an der Fließformniethülse und den Bauteilen verbleibenden Kopfes, das heißt ein unerwünschtes Lösen des Kopfes von der Fließformniethülse und den Bauteilen zu vermeiden, so dass der Kopf, welcher beispielsweise beim Fügen von dem Grundkörper getrennt wird, sicher in der Fließformniethülse verbleibt.

Dabei hat es sich als besonders vorteilhaft gezeigt, wenn die Ausnehmung in Umfangsrichtung des Kopfes vollständig umläuft. Darunter ist zu verstehen, dass sich die Ausnehmung in Umfangsrichtung des Kopfes vollständig, das heißt unterbrechungsfrei erstreckt, so dass die Ausnehmung beispielsweise zumindest im Wesentlichen ringförmig beziehungsweise als geschlossener Ring ausgebildet ist.

Die beispielsweise zumindest im Wesentlichen nutförmige beziehungsweise nutartige Ausnehmung kann somit eine besonders hohe Menge an verdrängtem Material aufnehmen, so dass der Kopf besonders fest an der Fließformniethülse beziehungsweise den Bauteilen gesichert werden kann.

Zusätzlich ist es vorgesehen, dass der Zugschaft zwischen dem Kopf und dem Grundkörper eine Sollbruchstelle umfasst. Bei dem Fügen kann der Zugschaft gezielt und kontrolliert an der Sollbruchstelle versagen, so dass der Grundkörper gezielt und kontrolliert an der Sollbruchstelle von dem Kopf getrennt wird, insbesondere von dem Kopf abreißt und/oder abbricht. Dadurch kann der Kopf an der Fließformniethülse und den Bauteilen verbleiben, wobei der Grundkörper von dem Kopf, der Fließformniethülse und den Bauteilen entfernt und beispielsweise entsorgt werden kann. Hierdurch können das Gewicht und der Bauraumbedarf der Verbindung gering gehalten werden. Ferner ist es möglich, durch den Einsatz der Sollbruchstelle ein unkontrolliertes Abreißen des Grundkörpers vom Kopf zu vermeiden, so dass der zumindest teilweise in der Fließformniethülse aufgenommene Kopf beziehungsweise der restliche, an der Fließformniethülse verbleibende Zugschaft auf Seiten des anderen Bauteils nicht oder zumindest nicht übermäßig aus der Fließformniethülse herausragt.

In vorteilhafter Ausgestaltung der Erfindung weist der Grundkörper des Zugschafts wenigstens ein Formschlusselement auf, über welches das Umformwerkzeug, mittels welchem die Relativbewegung des Zugschafts zu der Fließformniethülse bewirkbar ist, zumindest beim Bewirken der Relativbewegung in formschlüssiges Zusammenwirken mit dem Zugschaft bringbar ist. Dadurch können besonders hohe Kräfte, insbesondere Zugkräfte, von dem Umformwerkzeug auf den Zugschaft übertragen werden.

In einer besonders vorteilhaften Ausführungsform der Erfindung ist das Formschlusselement als Aufnahme ausgebildet, in welcher zumindest ein korrespondierendes, weiteres Formschlusselement des Umformwerkzeugs zumindest teilweise aufnehmbar ist. Das weitere Formschlusselement kann beispielsweise in Stützanlage mit den die Aufnahme des Grundkörpers zumindest teilweise begrenzenden Wandungsbereichen bewegt werden, so dass dadurch das Umformwerkzeug und der Grundkörper beziehungsweise der Zugschaft insgesamt formschlüssig zusammenwirken. Hierdurch können besonders hohe Zugkräfte übertragen werden. Da bei dieser Ausführungsform das Formschlusselement als Aufnahme und nicht etwa als Vorsprung ausgebildet ist, kann das Umformwerkzeug auf besonders einfache Weise auf den Grundkörper aufgesteckt beziehungsweise über diesen gestülpt werden. Darüber hinaus ist es dadurch möglich, die Kosten, das Gewicht und den Bauraumbedarf des Fügeelements gering zu halten.

Zur Realisierung eines besonders vorteilhaften formschlüssigen Zusammenwirkens zwischen dem Umformwerkzeug und dem Zugschaft ist es bei einer weiteren Ausführungsform der Erfindung vorgesehen, dass sich die Aufnahme in Umfangsrichtung des Grundkörpers vollständig umlaufend erstreckt. Dies bedeutet, dass die Aufnahme in Umfangsrichtung des Grundkörpers vollständig, das heißt unterbrechungsfrei um den Grundkörper verläuft, so dass die Aufnahme beispielsweise zumindest im Wesentlichen ringförmig beziehungsweise als geschlossener Ring ausgebildet ist. Dadurch kann beispielsweise das Umformwerkzeug besonders großflächig mit dem Grundkörper zusammenwirken, so dass auch besonders hohe Zugkräfte übertragen werden können. Ferner kann das Umformwerkzeug auf besonders einfache, zeit -und kostengünstige Weise an den Grundkörper angesetzt werden, so dass die Bauteile besonders einfach miteinander verbunden werden können. Weitere Vorteile, Merkmale und Einzelheiten der Erfindung ergeben sich aus der nachfolgenden Beschreibung eines bevorzugten Ausführungsbeispiels sowie anhand der Zeichnung.

Diese zeigen in:
- Fig. 1a: eine schematische Schnittansicht einer Fließformniethülse entlang einer in Fig. 1b gezeigten Schnittlinie A-A, wobei in die Fließformniethülse ein Zugschaft gemäß einer ersten Ausführungsform (welche nicht Teil der vorliegenden Erfindung ist) eingeführt wurde, so dass der Zugschaft zumindest teilweise in der Fließformniethülse aufgenommen ist;
- Fig. 1b: eine schematische Seitenansicht auf die Fließformniethülse sowie den in die Fließformniethülse eingeführten Zugschaft;
- Fig. 2a: eine schematische Schnittansicht der Fließformniethülse und des Zugschafts entlang einer in Fig. 2b gezeigten Schnittlinie C-C, wobei der Zugschaft vorliegend durch ein Umformwerkzeug gemäß einer ersten Ausführungsform aufgenommen und zusammen mit der Fließformniethülse in jeweilige Durchgangsöffnungen jeweiliger, zu fügender Bauteile eingeführt ist;
- Fig. 2b: eine schematische Seitenansicht auf den die Fließformniethülse aufnehmenden Zugschaft, welcher vorliegend durch das Umformwerkzeug aufgenommen ist und zusammen mit der Fließformniethülse in die Durchgangsöffnungen der Bauteile eingeführt ist;
- Fig. 2c: ausschnittsweise eine vergrößerte schematische Ansicht eines Bereichs A aus Fig. 2a;
- Fig. 3a: eine schematische Schnittansicht des mittels des Umformwerkzeugs relativ zu der Fließformniethülse bewegten Zugschafts entlang einer in Fig. 3b gezeigten Schnittlinie A-A, wobei infolge der Relativbewegung zwischen dem Zugschaft und der Fließformniethülse ein erster Randbereich der Fließformniethülse aufgeweitet und mit einem der Bauteile in Anlage gebracht wird;
- Fig. 3b: eine schematische Seitenansicht auf das Umformwerkzeug, mittels welchem eine Relativbewegung zwischen dem Zugschaft und der Fließformniethülse bewirkt wird beziehungsweise erfolgt, wobei der erste Randbereich der Fließformniethülse aufgeweitet und mit dem einen Bauteil in Anlage gebracht wird;
- Fig. 3c: eine schematische Detailansicht eines in Fig. 3a gezeigten Bereichs B;
- Fig. 4a: eine schematische Schnittansicht des Zugschaftes sowie der Fließformniethülse entlang einer in Fig. 4b gezeigten Schnittlinie A-A, wobei die Fließformniethülse infolge der durch das Umformwerkzeug herbeigeführten Relativbewegung zwischen dem Zugschaft und der Fließformniethülse an einem zweiten Randbereich zu dem anderen Bauteil hin umgebogen und mit dem anderen Bauteil in Anlage gebracht wird;
- Fig. 4b: eine schematische Seitenansicht der mittels des Umformwerkzeugs an ihrem Randbereich umgeformten Fließformniethülse;
- Fig. 4c: eine schematische Detailansicht eines in Fig. 4a gezeigten Bereichs B;
- Fig. 5a: eine schematische Schnittansicht des Zugschafts entlang einer in Fig. 5b dargestellten Schnittlinie A-A, wobei bei dem Zugschaft infolge der Relativbewegung zwischen der Fließformniethülse und dem Zugschaft ein Grundkörper des Zugschaftes von einem Kopf des Zugschaftes an einer Sollbruchstelle getrennt wurde;
- Fig. 5b: eine schematische Seitenansicht auf das Umformwerkzeug sowie den von dem Grundkörper getrennten Kopf des Zugschaftes sowie die die jeweiligen Bauteile fügende Fließformniethülse;
- Fig. 5c: eine schematische Detailansicht eines in Fig. 5a gezeigten Bereichs B;
- Fig. 6a: eine schematische Schnittansicht der Fließformniethülse entlang einer in Fig. 6b gezeigten Schnittlinie A-A, wobei die Fließformniethülse an den jeweiligen Bauteilen fixiert ist und der Kopf des Zugschaftes in der Fließformniethülse zumindest teilweise aufgenommen ist;
- Fig. 6b: eine schematische Seitenansicht auf den von dem Kopf getrennten Grundkörper des Zugschaftes, welcher aus dem Umformwerkzeug entfernt wurde;
- Fig. 6c: eine schematische Detailansicht eines in Fig. 6a gezeigten Bereichs B;
- Fig. 7: eine schematische Seitenansicht auf den Zugschaft gemäß einer zweiten Ausführungsform (welche Teil der vorliegenden Erfindung ist);
- Fig. 8: eine schematische Detailansicht eines in Fig. 7 gezeigten Bereichs A;
- Fig. 9: eine weitere schematische Seitenansicht auf den Zugschaft gemäß der zweiten Ausführungsform;
- Fig. 10: eine schematische Detailansicht eines in Fig. 9 gezeigten Bereichs B;
- Fig. 11: eine schematische Draufsicht auf ein Fügeelement, welches die Fließformniethülse und den in die Fließformniethülse eingeführten und somit teilweise in der Fließformniethülse aufgenommenen Zugschaft gemäß der zweiten Ausführungsform umfasst;
- Fig. 12: eine schematische und perspektivische Draufsicht auf ein Bauteil, an welchem Fließformniethülsen sowie herkömmliche Niete fixiert sind;
- Fig. 13: eine schematische und perspektivische Unteransicht auf ein gemäß Fig. 12;
- Fig. 14: eine schematische Schnittansicht durch das Fügeelement und das Umformwerkzeug gemäß der jeweiligen zweiten Ausführungsform; und
- Fig. 15: ausschnittsweise eine weitere schematische Schnittansicht durch das Fügeelement und das Umformwerkzeug gemäß der jeweiligen zweiten Ausführungsform.

In den Figuren sind gleiche oder funktionsgleiche Elemente mit gleichen Bezugszeichen versehen.

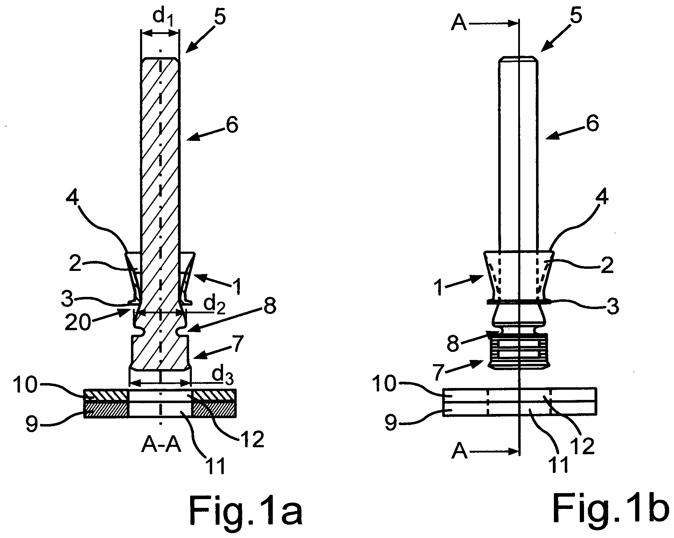

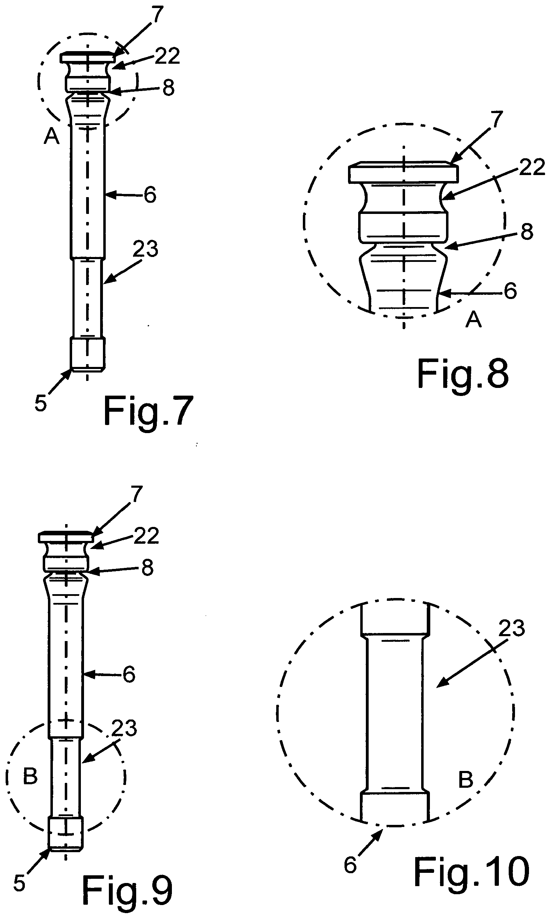

In Fig. 1a ist eine Schnittansicht entsprechend einer in Fig. 1b dargestellten Schnittlinie A-A gezeigt, wobei eine Fließformniethülse 1, welchen einen konusförmigen Mantelbereich 2 sowie einen ersten Randbereich 3 und einen zweiten Randbereich 4 aufweist, durch einen Zugschaft 5 aufgenommen ist. Die Fließformniethülse 1 und der Zugschaft 5 sind Bestandteil eines Fügeelements beziehungsweise bilden ein Fügeelement, welches in Fig. 1a bis 6c gemäß einer ersten Ausführungsform (welche nicht Teil der vorliegenden Erfindung, jedoch wichtig für ihr Verständnis ist) und in Fig. 7 bis 15 gemäß einer zweiten Ausführungsform (welche Teil der vorliegenden Erfindung ist) veranschaulicht ist. Der Zugschaft 5 weist über weite Bereiche seiner Längserstreckung einen Grundkörper 6 auf, welcher zumindest im Wesentlichen aus einem zylinderförmigen Vollkörper mit einem Durchmesser d₁ gebildet ist, wobei dieser Grundkörper 6 an einem Ende von der Zylinderform in eine konusartige Form mit einem Durchmesser d₂ übergeht. An den Bereich mit der konusartigen Form (Durchmesser d₂) schließt eine Sollbruchstelle 8 an, welche den Grundkörper 6 mittels einer für Sollbruchstellen typischen Einschnürung von einem Kopf 7 des Zugschaftes 5 abgrenzt. Mit anderen Worten ist die Sollbruchstelle 8 in axialer Richtung des Zugschafts 5 zwischen dem Grundkörper 6 und dem Kopf 7 angeordnet, wobei die axiale Richtung des Zugschaftes 5 mit der axialen Richtung der Fließformniethülse 1 sowie mit der Längserstreckungsrichtung des Zugschaftes 5 zusammenfällt. Der Kopf 7 weist eine deutliche kürzere Längserstreckung als der Grundkörper 6 auf und ist ebenfalls weitgehend zylinderförmig ausgebildet. An einem an die Sollbruchstelle 8, insbesondere in axialer Richtung, anschließenden Ende des Kopfes 7 weist der Kopf 7 einen Durchmesser auf, welcher im Wesentlichen dem Durchmesser d₂ entspricht. An dem dazu gegenüberliegenden Ende des Kopfes 7 weist dieser eine konusförmige Aufweitung auf einen Durchmesser d₃ auf. Mit anderen Worten weist also der Zugschaft 5 an dem einen Ende den Durchmesser d₁ und an dem dazu gegenüberliegenden Ende den Durchmesser da auf.

Die Fließformniethülse 1 entspricht einem einseitig zugänglichen Fließformniet (EFFN). Die Fließformniethülse 1, in welche der Zugschaft 5 vorliegend eingeführt ist beziehungsweise wurde, so dass der Zugschaft 5 teilweise in der Fließformniethülse 1 aufgenommen ist, liegt an einem Auflagebereich 20 des Zugschaftes 5 auf diesem auf. Der Auflagebereich 20 entspricht dabei dem Bereich des Grundkörpers 6, an welchem ein Durchmesserübergang von dem Durchmesser d₁ auf den Durchmesser d₂ erfolgt. Mit anderen Worten entspricht der Auflagebereich 20 dem Bereich des Grundkörpers 6, an welchem die konusartige Aufweitung von dem Durchmesser d₁ auf den Durchmesser d₂ beginnt. Die Fließformniethülse 1 liegt also deshalb an dem Auflagebereich 20 auf, da der Innendurchmesser der Fließformniethülse 1 an ihrem ersten Randbereich 3 nur geringfügig größer ist als der Durchmesser d₁, jedoch deutlich kleiner als der Durchmesser d₂.

Fig. 1a und 1b zeigen ebenfalls zwei Bauteile 9 und 10, wobei das Bauteil 10 dem Zugschaft 5 beziehungsweise der Fließformniethülse 1 zugewandt ist und dementsprechend zwischen dem Bauteil 9 und dem Zugschaft 5 angeordnet ist. Die Bauteile 9 und 10 schließen unmittelbar aneinander an und weisen jeweils miteinander fluchtende Durchgangsöffnungen 11 und 12 auf. Die Durchgangsöffnung 11 ist an dem einen Bauteil 9 angeordnet, und die Durchgangsöffnung 12 ist an dem anderen Bauteil 10 angeordnet. Mit anderen Worten überlappen sich die Bauteile 9 und 10 zumindest in einem jeweiligen Überlappungsbereich, wobei in dem Überlappungsbereich des einen Bauteils 9 die Durchgangsöffnung 11 und in dem Überlappungsbereich des anderen Bauteils 10 die Durchgangsöffnung 12 angeordnet ist. Dabei überlappen sich die Bauteile 9 und 10 in den Überlappungsbereichen derart, dass sich die Durchgangsöffnungen 11 und 12 zumindest teilweise gegenseitig überlappen, wobei die Durchgangsöffnungen 11 und 12 vorliegend zumindest im Wesentlichen miteinander fluchten.

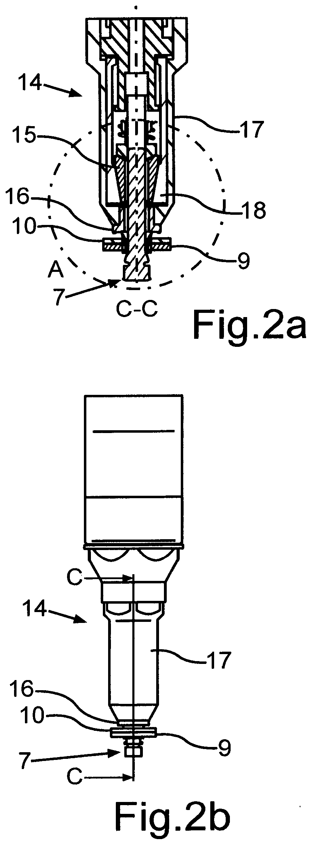

Fig. 2a zeigt eine Schnittansicht gemäß einer in Fig. 2b dargestellten Schnittlinie C-C, wobei sowohl ein Umformwerkzeug 14 gemäß einer ersten Ausführungsform als auch das Fügeelement gemäß der ersten Ausführungsform (welche wiederum nicht Teil der vorliegenden Erfindung ist), das heißt der Zugschaft 5 und die Fließformniethülse 1 gemäß der jeweiligen ersten Ausführungsform dargestellt sind. Ferner sind in Fig. 2a die Bauteile 9 und 10 dargestellt.

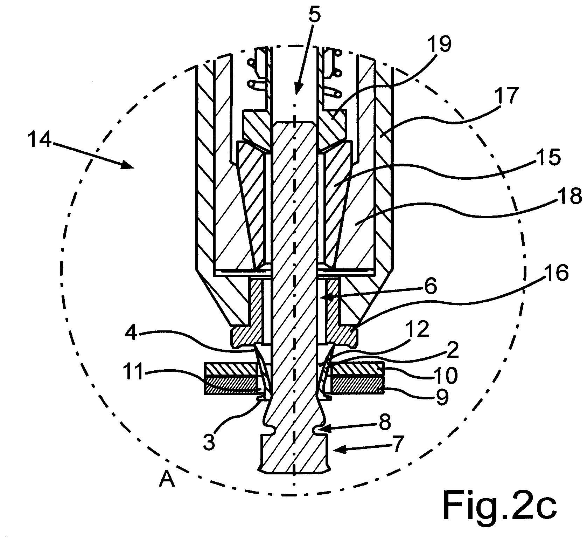

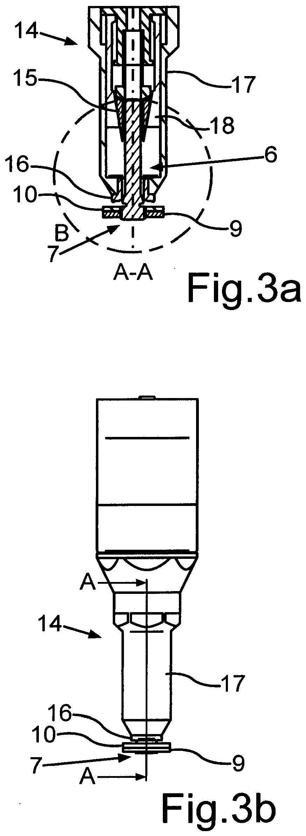

Fig. 2c zeigt eine vergrößerte Detailansicht eines in der Schnittdarstellung in Fig. 3a kreisförmig umrandeten Bereichs A. In Fig. 2a bis 2c wird das Einsetzen der Fließformniethülse 1 sowie die Aufnahme des Zugschaftes 5 in dem Umformwerkzeug 14, welches auch als Setzgerät bezeichnet wird, gezeigt. Das Umformwerkzeug 14 wird auf den Zugschaft 5 aufgeschoben, bis ein Schließkopfadapter 16 des Umformwerkzeugs 14 an dem zweiten Randbereich 4 der Fließformniethülse 1 (EFFN) zur Anlage kommt und dort verliersicher positioniert ist. Neben dem beziehungsweise zusätzlich zu dem Schließkopfadapter 16 weist das Umformwerkzeug 14 auch jeweilige Klauen 15, einen Zugadapter 18 sowie ein Konusspannelement 19 auf. Das Konusspannelement 19, die Klauen 15 sowie der Zugadapter 18 sind in einem Gehäuse 17 des Umformwerkzeugs 14 aufgenommen. Der Schließkopfadapter 16 wird ebenfalls durch das Gehäuse 17 aufgenommen, ragt jedoch an seinem mit dem zweiten Randbereich 4 der Fließformniethülse 1 in Kontakt stehenden Ende aus dem Gehäuse 17 hervor. Die an dem Umformwerkzeug 14 fixierte Fließformniethülse 1(EFFN), deren zweiter Randbereich 4 an den Schließkopfadapter 16 angelegt ist, wird nun in das vorgelochte Blechpaket, also in die zueinander fluchtenden Durchgangsöffnungen 11 und 12 der jeweiligen Bauteile 9 und 10 eingeschoben. Dieses Einschieben erfolgt beispielsweise in eine mit der axialen Richtung des Zugschaftes 5 zusammenfallende Fügerichtung, welche von dem anderen Bauteil 10 in Richtung des einen Bauteils 9 weist und beispielsweise zumindest im Wesentlichen senkrecht zu den Bauteilen 9 und 10 verläuft.

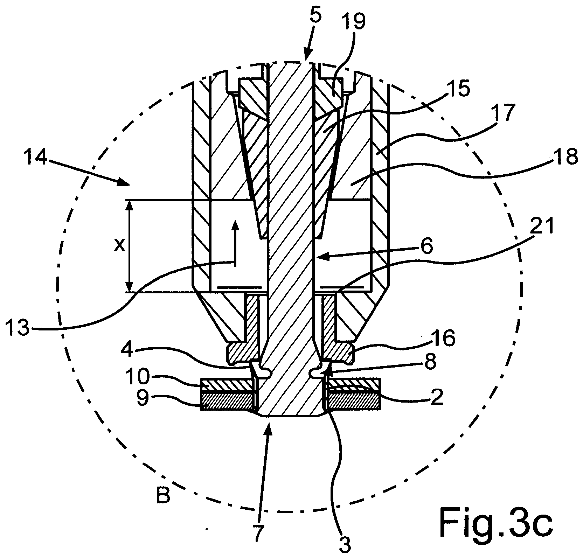

Fig. 3a bis 3c zeigen erste Schritte eines Umformprozesses der Fließformniethülse 1 mittels des Umformwerkzeugs 14 (Setzgerät). Fig. 3a zeigt dabei eine Schnittansicht gemäß einer in Fig. 3b dargestellten Schnittlinie A-A, wobei sowohl das Umformwerkzeug 14 als auch der Zugschaft 5, die Fließformniethülse 1 sowie die Bauteile 9 und 10 dargestellt sind. Fig. 3c zeigt eine vergrößerte Teilansicht eines in der Schnittdarstellung in Fig. 3a kreisförmig umrandeten Bereichs B.

Bei der Betätigung des Umformwerkzeugs 14 wird nun der Zugadapter 18 von einer Gehäusefläche 21 entfernt, bis sich zwischen der Gehäusefläche 21 und dem Zugadapter 18 ein Hub x einstellt. Das Konusspannelement 19 ist federkraftbetätigt und erzeugt bei Beabstandung des Zugadapters 18 von der Gehäusefläche 21 eine der Richtung einer mit einem Pfeil gekennzeichneten Relativbewegung 13 entgegenwirkenden Kraft. Der in Fig. 3c gezeigte und die Relativbewegung 13 veranschaulichende Pfeil veranschaulicht ferner eine Richtung beziehungsweise eine Zugrichtung, in die der Zugschaft 5 mittels des Umformwerkzeugs 14 relativ zur Fließformniethülse 1 bewegt, insbesondere translatorisch bewegt, und vorliegend gezogen wird. Diese Richtung beziehungsweise Zugrichtung ist dabei der zuvor genannten Fügerichtung entgegengesetzt. Dies bedeutet, dass die Relativbewegung zwischen der Fließformniethülse 1 und dem Zugschaft 5 mittels des Umformwerkzeugs 14 bewirkt beziehungsweise herbeigeführt wird.

Die Klauen 15 stehen vorliegend mit dem Zugadapter 18 über eine jeweils konusförmige Kontur in Kontakt. Durch die Federkraft, welche durch das Konusspannelement 19 auf die Klauen 15 einwirkt, gleiten diese solange an der konusförmigen Fläche des Zugadapters 18 ab, bis die Klauen 15 den Zugschaft 5 an seinem zylinderförmigen Grundkörper 6 umgreifen und diesen dabei kraft- und formschlüssig einklemmen. Somit wird also zunächst der Zugschaft 5 in dem Umformwerkzeug 14 kraft- und formschlüssig umschlossen und schließlich zusammen mit dem Zugadapter 18 entsprechend der Relativbewegung 13 von der Fließformniethülse 1 beabstandet, bis sich zunächst ein Hub x zwischen dem Zugadapter 18 und der Gehäusefläche 21 einstellt.

Die Relativbewegung 13 zwischen dem Zugschaft 5 und der Fließformniethülse 1 erfolgt also mit anderen Worten dadurch, dass die Fließformniethülse 1 an ihrem zweiten Randbereich 4 unter Vermittlung des Schließkopfadapters 16 an dem Gehäuse 17 des Umformwerkzeugs 14 abgestützt wird, während der Zugadapter 18 und mit diesem der Zugschaft 5 entsprechend der Relativbewegung 13 bewegt werden. Wie insbesondere anhand von Fig. 3c erkennbar ist, wird durch die Relativbewegung 13 und damit durch die Einstellung des Hubs x der Kopf 7 in die Fließformniethülse 1 eingezogen und diese zylindrisch an die Durchgangsöffnungen 11 und 12 angepresst. Mit anderen Worten wird also bei der Relativbewegung 13 der Durchmesser des ersten Randbereichs 3 dadurch vergrößert, dass die Fließformniethülse 1 ausgehend von dem Auflagebereich 20, also von dem Durchmesser d₁ auf den Durchmesser d₂ aufgeweitet wird.

Dabei wird der im Grundzustand konusförmig ausgebildete Mantelbereich 2 der Fließformniethülse 1 solange infolge der Relativbewegung 13 verformt, bis der Mantelbereich 2 an den jeweiligen Durchgangsöffnungen 11 und 12 der Bauteile 9 und 10 anliegt und dementsprechend nunmehr zylinderförmig ausgebildet ist. Mit anderen Worten ist also der Mantelbereich 2 zunächst als Konus ausgebildet und wird infolge der Relativbewegung 13 zu einem Zylinder verformt. Der erste Randbereich 3 wird durch die Relativbewegung 13 aufgeweitet und mit dem einen Bauteil 9 in Anlage gebracht. Der erste Randbereich 3 ragt dabei aus der Durchgangsöffnung 11 hervor und weist nunmehr einen größeren Durchmesser auf als die Durchgangsöffnung 11. Der aufgeweitete erste Randbereich 3 wird somit aufgeweitet und mit dem Bauteil 9 in Anlage gebracht. Aus dem ersten Randbereich 3 wird dabei ein sogenannter Setzkopf gebildet beziehungsweise der erste Randbereich 3 wird durch das Aufweiten in einen sogenannten Setzkopf umgeformt. Der aufgeweitete und dadurch zu dem Setzkopf umgeformte erste Randbereich 3 bildet beispielsweise zusammen mit dem Kopf 7 des Zugschaftes 5 einen sogenannten Sekundärsetzkopf. Bemerkenswert ist beim Umformen der Fließformniethülse 1, dass nahezu während des gesamten Umformprozesses, also während der Verformung der beiden Randbereiche 3 und 4 sowie des Mantelbereichs 2, keine oder zumindest nur eine sehr geringe Kraftwirkung auf die Bauteile 9 und 10 erfolgt, da der Kraftschluss der umformenden Verformungskraft weitgehend innerhalb der Fließformniethülse 1 erfolgt. Es ist natürlich klar, dass auf die Bauteile 9 und 10 spätestens dann eine Kraft wirkt, wenn die beiden Randbereiche 3 und 4 beziehungsweise der Mantelbereich 2 mit den Bauteilen 9 und 10 in Anlage gebracht wird.

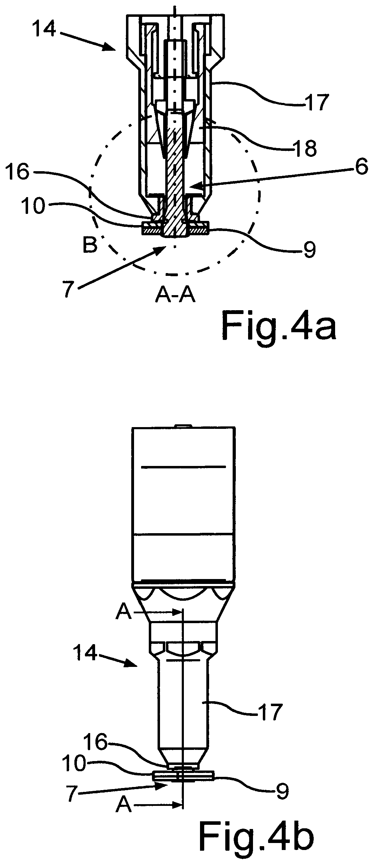

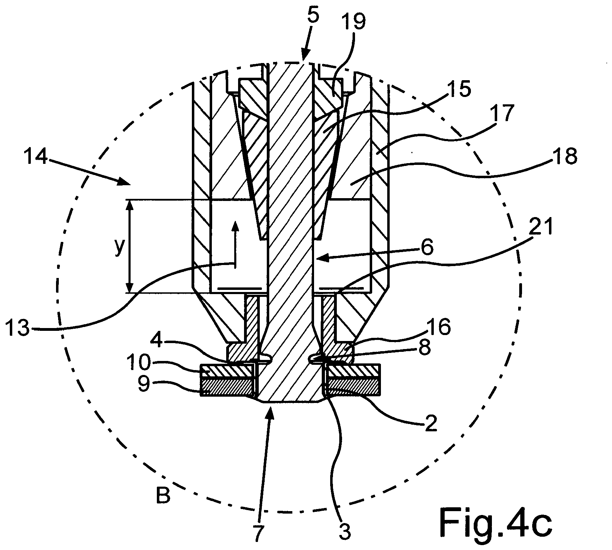

Fig. 4a bis 4c zeigen einen weiteren Schritt des Umformprozesses der Fließformniethülse 1 mittels des Umformwerkzeugs 14, wobei infolge der Relativbewegung 13 der Hub x, also der Abstand zwischen dem Zugadapter 18 und der Gehäusefläche 21, nunmehr auf einen Hub y vergrößert wurde. Beim Einstellen auf den Hub y wird dabei der zweite Randbereich 4 mittels des Umformwerkzeugs 14 zum anderen Bauteil 10 hin umgebogen, also plastisch verformt und somit mit dem anderen Bauteil 10 in Anlage gebracht. Ebenso wie der erste Randbereich 3 ragt auch der zweite Randbereich 4 über die entsprechende Durchgangsöffnung 12 hinaus und weist dementsprechend - infolge der Umformung - einen größeren Durchmesser auf als die Durchgangsöffnung 12. Der zweite Randbereich 4 wird dabei zu einem sogenannten Schließkopf umgeformt beziehungsweise aus dem zweiten Randbereich 4 wird ein sogenannter Schließkopf gebildet, indem der zweite Randbereich 4 umgebogen, mit dem anderen Bauteil 10 in Anlage gebracht und dadurch umgeformt wird.

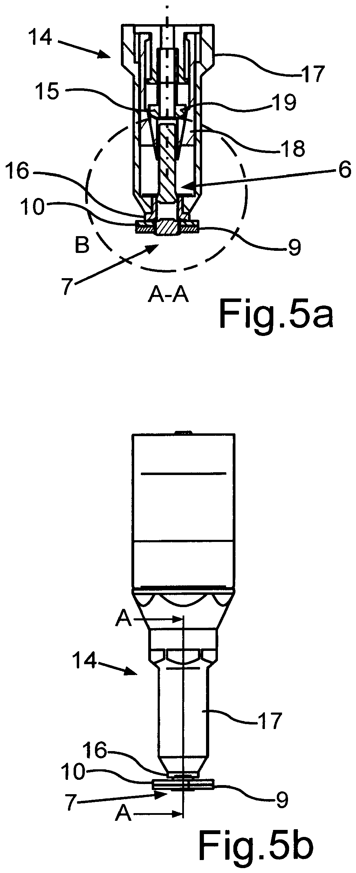

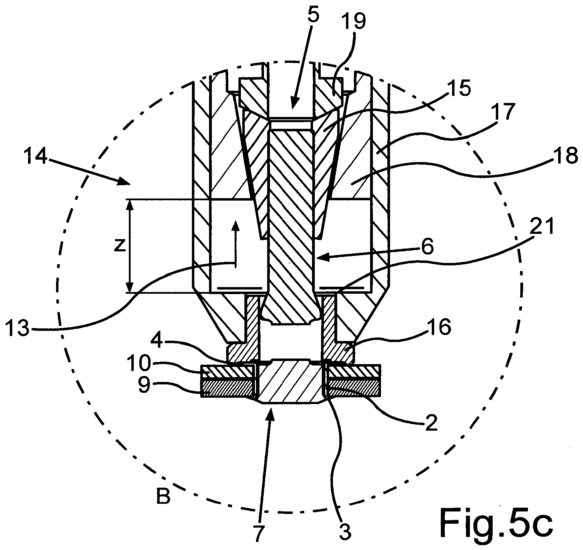

Fig. 5a bis 5c zeigen die letzte Phase des Umformprozesses, wobei nunmehr infolge der Relativbewegung 13 der Hub y auf einen Hub z vergrößert wird. Die Kraft des Zugadapters 18 erhöht sich dabei so weit, dass die maximal zulässige Zugspannung in dem Zugschaft 5 überschritten und dabei der Kopf 7 von dem Grundkörper 6 an der Sollbruchstelle 8 getrennt wird. Mit anderen Worten reißt also der Zugschaft 5 an der Sollbruchstelle 8 ab. Gleichzeitig wird durch den weiteren Kraftanstieg das Material der Fließformniethülse 1 soweit plastisch verformt, dass eine ausreichende Kaltverfestigung durch entsprechendes Gefüge-Setzverhalten erreicht wird.

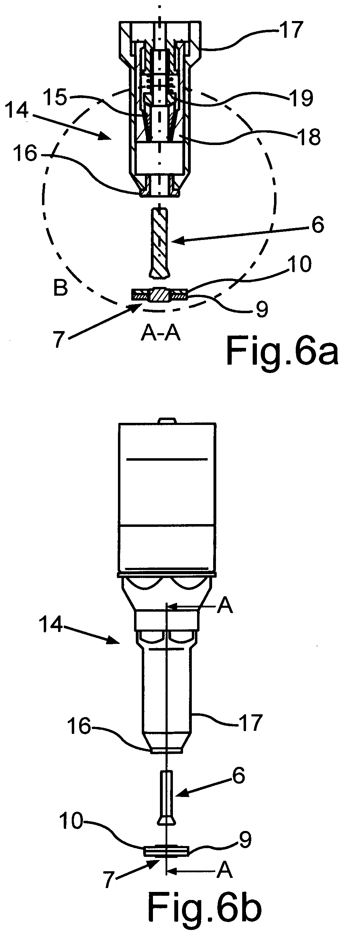

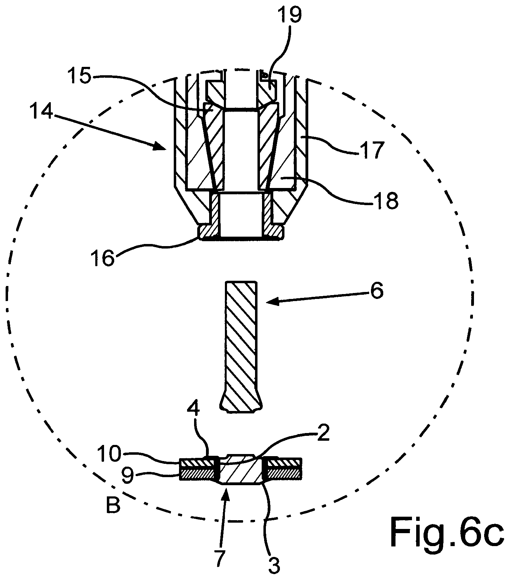

In Fig. 6a bis 6c wird gezeigt, wie der von dem Kopf 7 getrennte Grundkörper 6 aus dem Umformwerkzeug 14 entfernt wird, wobei das Umformwerkzeug 14 nunmehr wieder bereit ist, die nächste Fließformniethülse 1 beziehungsweise den nächsten Zugschaft 5 aufzunehmen. Wie insbesondere in Fig. 6c erkennbar ist, kann der Grundkörper 6 aus dem Umformwerkzeug 14 dadurch entfernt werden, dass der Hub zwischen dem Zugadapter 18 und der Gehäusefläche 21 wieder verkleinert wird. Der Kopf 7 des Zugschaftes 5 verbleibt vorliegend zumindest teilweise, insbesondere zumindest überwiegend oder vollständig, in der umgeformten Fließformniethülse 1. Es ist jedoch klar, dass der Kopf 7 aus der Fließformniethülse 1 auch wieder entfernt werden könnte.

Anhand von Fig. 7 bis 15 ist eine zweite Ausführungsform des Fügeelements (welche Teil der vorliegenden Erfindung ist) sowie eine zweite Ausführungsform des Umformwerkzeugs 14 veranschaulicht. Fig. 7 zeigt den Zugschaft 5 des Fügeelements gemäß der zweiten Ausführungsform. Dabei zeigt Fig. 8 einen in Fig. 7 gezeigten Bereich A in einer vergrößerten Darstellung. Wie besonders gut aus Fig. 7 und 8 erkennbar ist, weist der Kopf 7 des Zugschaftes 5 eine Ausnehmung 22 auf, welche beim Fügen verdrängtes Material aufnimmt. Aus Fig. 7 ist erkennbar, dass die Ausnehmung 22 eine von der Sollbruchstelle 8 unterschiedliche Ausnehmung ist. Dies ergibt sich schon dadurch, dass die Sollbruchstelle 8 in axialer Richtung des Zugschaftes 5 zwischen dem Grundkörper 6 und dem Kopf 7 angeordnet ist, wobei die Ausnehmung 22 am Kopf 7 vorgesehen ist. Mit anderen Worten erfolgt beim Fügen der Bauteile 9 und 10 eine Materialverdrängung, in deren Rahmen beispielsweise Material wenigstens eines der Bauteile 9 und 10 und/oder Material der Fließformniethülse 1 verdrängt wird. Dieses verdrängte Material kann zumindest teilweise in die Ausnehmung 22 gelangen, insbesondere fließen, so dass dann beispielsweise das in die Ausnehmung 22 gelangte, verdrängte Material formschlüssig mit dem Kopf 7 zusammenwirkt. Durch dieses formschlüssige Zusammenwirken wird der Kopf 7, welcher vom Grundkörper 6 im Rahmen des Fügens getrennt wird, sicher an und in der Fließformniethülse 1 gehalten und somit besonders effektiv gegen Verlieren gesichert. Dies bedeutet, dass somit die Gefahr, dass sich der Kopf 7 unerwünschterweise von der Fließformniethülse 1 und den Bauteilen 9 und 10 löst, besonders gering gehalten werden kann.

Aus Fig. 7 und 8 ist besonders gut erkennbar, dass sich die Ausnehmung 22 vorliegend in Umfangsrichtung des Kopfes 7 vollständig umlaufend erstreckt. Dies bedeutet, dass die Ausnehmung 22 in Umfangsrichtung des Kopfes 7 vollständig, das heißt unterbrechungsfrei um den Kopf 7 verläuft, so dass die Ausnehmung 22 beispielsweise ringförmig beziehungsweise als geschlossener Ring ausgebildet ist. Ferner ist die Ausnehmung 22 vorliegend nutartig beziehungsweise nutförmig, insbesondere als Nut, ausgebildet. Die Ausnehmung 22 kann somit eine besonders hohe Menge an verdrängtem Material aufnehmen. Insbesondere ist es möglich, dass das verdrängte Material den Kopf 7 in dessen Umfangsrichtung zumindest überwiegend oder gar vollständig umlaufend umgibt, so dass der Kopf 7 besonders sicher an der Fließformniethülse 1 und den Bauteilen 9 und 10 gehalten ist.

Fig. 9 zeigt den Zugschaft 5 gemäß der zweiten Ausführungsform in einer weiteren schematischen Seitenansicht, wobei in Fig. 10 ein Bereich B aus Fig. 9 vergrößert dargestellt ist. Aus Fig. 9 und 10 ist erkennbar, dass der Grundkörper 6 des Zugschafts 5 wenigstens ein Formschlusselement 23 aufweist, über welches das Umformwerkzeug 14, mittels welchem die Relativbewegung des Zugschafts 5 zu der Fließformniethülse 1 bewirkt wird, zumindest beim Bewirken der Relativbewegung formschlüssig mit dem Zugschaft 5 zusammenwirkt. Mit anderen Worten ist das Umformwerkzeug zumindest beim Wirken der Relativbewegung in formschlüssiges Zusammenwirken mit dem Zugschaft 5 über das Formschlusselement 23 bringbar. Das Formschlusselement 23 ist dabei ein von der Sollbruchstelle 8 unterschiedliches und auch ein von der Ausnehmung 22 unterschiedliches Formschlusselement 23, da die Sollbruchstelle 8 in axialer Richtung des Zugschaftes 5 zwischen dem Grundkörper 6 und dem Kopf 7, die Ausnehmung 22 am Kopf 7 und das Formschlusselement 23 jedoch am Grundkörper 6 angeordnet ist.

Aus Fig. 9 und 10 ist besonders gut erkennbar, dass das Formschlusselement 23 vorliegend als Aufnahme ausgebildet ist, in welcher zumindest ein korrespondierendes, weiteres Formschlusselement des Umformwerkzeugs 14 zumindest teilweise aufnehmbar ist. Die Aufnahme erstreckt sich dabei in Umfangsrichtung des Grundkörpers 6 vollständig umlaufend, so dass die Aufnahme als in Umfangsrichtung des Grundkörpers 6 vollständig umlaufender, geschlossener und unterbrechungsfreier Ring ausgebildet ist. Vorliegend ist das Formschlusselement 23 beziehungsweise die Aufnahme als vollständig umlaufende beziehungsweise unterbrechungsfreie und geschlossene Nut ausgebildet, die eine Übertragung von besonders hohen Zugkräften zwischen dem Umformwerkzeug 14 und dem Zugschaft 5 gewährleistet.

Vorliegend weist das Umformwerkzeug 14 eine Mehrzahl von weiteren Formschlusselementen in Form der Klauen 15 auf, welche zumindest zum Bewirken der Relativbewegung zwischen dem Zugschaft 5 und der Fließformniethülse 1 über das Formschlusselement 23 formschlüssig mit dem Zugschaft 5 zusammenwirken. Hierzu sind die jeweiligen Klauen 15 zumindest teilweise in der Aufnahme (Formschlusselement 23) aufgenommen beziehungsweise greifen in die Aufnahme (Formschlusselement 23) ein. Somit ergeben die Klauen 15 und die korrespondierende Aufnahme eine formschlüssige Geometrie, über welche auch hohe Zugkräfte übertragen werden können. Die Klauen 15 werden auch als Greifklauen bezeichnet und können zwei- oder mehrteilig ausgeführt sein. Zum formschlüssigen Zusammenwirken werden die Klauen 15 beispielsweise in Stützanlage mit jeweiligen, die Aufnahme zumindest teilweise begrenzenden Wandungen des Grundkörpers 6 gebracht, so dass beispielsweise Kräfte zwischen den Klauen 15 und diesen Wandungen übertragen werden können.

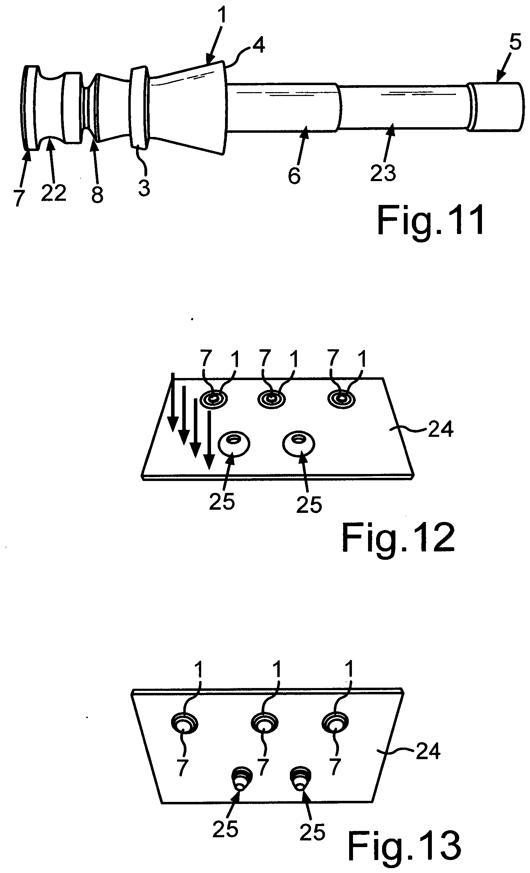

Fig. 11 zeigt das den Zugschaft 5 und die Fließformniethülse 1 umfassende Fügeelement in einer schematischen Draufsicht, wobei ein Längenbereich des Zugschafts 5 in der Fließformniethülse 1 aufgenommen ist, da der Zugschaft 5 in die Fließformniethülse 1 eingeschoben ist.

Fig. 12 zeigt in einer schematischen und perspektivischen Draufsicht ein Bauteil 24, an welchem Fließformniethülsen 1 und die von den jeweiligen Grundkörpern 6 getrennten Köpfe 7 fixiert sind. Ferner sind am Bauteil 24 herkömmliche Niete 25 vorgesehen. Fig. 12 zeigt eine erste Seite des Bauteils 24, wobei Fig. 13 eine der ersten Seite des Bauteils 24 abgewandte, zweite Seite des Bauteils 24 zeigt. Aus Fig. 12 und 13 ist besonders gut erkennbar, dass die jeweilige Fließformniethülse 1 und der Kopf 7 eine wesentlich geringere, in axialer Richtung verlaufende Länge aufweisen und somit einen wesentlich geringeren Bauraum beanspruchen als die herkömmlichen Niete 25. Mit anderen Worten stehen die Fließformniethülsen 1 sowohl auf der ersten Seite als auch auf der zweiten Seite des Bauteils 24 wesentlich weniger weit vom Bauteil 24 ab als die herkömmlichen Niete 25. Dadurch können die Bauteile 9 und 10 nicht nur besonders fest, insbesondere hochfest, sondern auch besonders platzsparend miteinander verbunden werden.

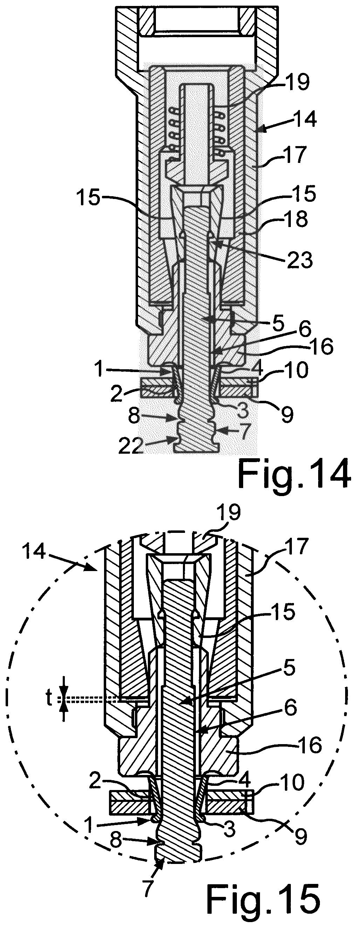

Fig. 14 und 15 zeigen besonders gut das formschlüssige Zusammenwirken des Umformwerkzeugs 14 mit dem Zugschaft 5, insbesondere dem Grundkörper 6. Aus Fig. 14 und 15 ist erkennbar, dass die Klauen 15 in das korrespondierende, als Aufnahme ausgebildete Formschlusselement 23 eingreifen, so dass besonders hohe Kräfte, insbesondere Zugkräfte, formschlüssig zwischen dem Umformwerkzeug 14 und dem Zugschaft 5, insbesondere vom Umformwerkzeug 14 auf den Zugschaft 5, übertragen werden können. Insgesamt ist es somit möglich, die Bauteile 9 und 10 bei einer lediglich einseitigen Zugängigkeit bauraum- und festigkeitsoptimiert formschlüssig zu fügen. Darüber hinaus ist in Fig. 15 ein Abstand t zwischen dem Zugadapter 18 und dem Gehäuse 17 veranschaulicht, wobei der Abstand t kein Hub ist beziehungsweise der Zugadapter 18 über den Abstand t keinen Hub ausführt.

## Patentansprüche

1. Verfahren zum Fügen wenigstens zweier Bauteile (9, 10), insbesondere zweier Blechbauteile einer Fahrzeugkarosserie, mittels einer einen Mantelbereich (2), einen ersten Randbereich (3) und einen zweiten Randbereich (4) umfassenden Fließformniethülse (1), in welche ein einen Grundkörper (6) und einen Kopf (7) umfassender Zugschaft (5) eingeführt wird und welche in jeweilige, zumindest im Wesentlichen miteinander fluchtende Durchgangsöffnungen (11, 12) der Bauteile (9, 10) eingeschoben wird, wonach durch eine Relativbewegung (13) des Zugschafts (5) zu der Fließformniethülse (1) diese im ersten Randbereich (3) aufgeweitet und mit einem Bauteil (9) in Anlage gebracht wird,
wobei der zweite Randbereich (4) mittels eines den Zugschaft (5) umgebenden Umformwerkzeugs (14) zum anderen Bauteil (10) hin umgebogen und mit dem anderen Bauteil (10) in Anlage gebracht wird,
wobei der Kopf (7) des Zugschaftes (5) wenigstens eine Ausnehmung (22) aufweist, welche beim Fügen verdrängtes Material der Fließformniethülse (1) aufnimmt,
**dadurch gekennzeichnet, dass** ein Zugschaft (5) verwendet wird, welcher über weite Bereiche seiner Längserstreckung den Grundkörper (6) aufweist, welcher zumindest im Wesentlichen aus einem zylinderförmigen Vollkörper mit einem Durchmesser d₁ gebildet ist, wobei zum Aufweiten der Fließformniethülse (1) im ersten Randbereich (3) der Grundkörper (6) an einem Ende von der Zylinderform in eine konusartige Aufweitung mit einem Durchmesser d₂ übergeht, und
wobei sich an diesen Bereich mit der konusartigen Aufweitung eine Sollbruchstelle (8) anschließt, welche den Grundkörper (6) mittels einer Einschnürung von dem Kopf (7) des Zugschaftes (5) abgrenzt.

2. Verfahren nach Anspruch 1,
**dadurch gekennzeichnet, dass**
der Grundkörper (6) des Zugschafts (5) wenigstens ein Formschlusselement (23) aufweist, über welches das Umformwerkzeug (14), mittels welchem die Relativbewegung (13) des Zugschafts (5) zu der Fließformniethülse (1) bewirkt wird, zumindest beim Bewirken der Relativbewegung formschlüssig mit dem Zugschaft (5) zusammenwirkt.

3. Verfahren nach einem der vorhergehenden Ansprüche,
**dadurch gekennzeichnet, dass**
jeweilige Durchmesser der Randbereiche (3, 4) bei der Relativbewegung (13) vergrößert werden.

4. Verfahren nach einem der vorhergehenden Ansprüche
**dadurch gekennzeichnet, dass**
der Mantelbereich (2) konisch ausgebildet ist und infolge der Relativbewegung (13) zylindrisch verformt wird.

5. Fügeelement zum Fügen wenigstens zweier Bauteile (9, 10), insbesondere zweier Blechbauteile einer Fahrzeugkarosserie, mit einer Fließformniethülse (1), welche einen Mantelbereich (2), einen ersten Randbereich (3) und einen zweiten Randbereich (4) aufweist, und mit einem in die Fließformniethülse (1) eingeführten, einen Grundkörper (6) und einen Kopf (7) umfassenden Zugschaft (5), wobei die Fließformniethülse (1) in jeweilige, zumindest im Wesentlichen miteinander fluchtende Durchgangsöffnungen (11, 12) der Bauteile (9, 10) einschiebbar ist, wonach durch eine Relativbewegung (13) des Zugschafts (5) zu der Fließformniethülse (1) diese im ersten Randbereich (3) aufweitbar und an ein Bauteil (9) anlegbar ist,
wobei der zweite Randbereich (4) mittels eines den Zugschaft (5) umgebenden Umformwerkzeugs (14) zum anderen Bauteil (10) hin umbiegbar und an das andere Bauteil (10) anlegbar ist,
**dadurch gekennzeichnet, dass** der Kopf (7) des Zugschaftes (5) wenigstens eine Ausnehmung (22) aufweist, welche derart ausgebildet ist, dass sie beim Fügen verdrängtes Material der Fließformniethülse (1) aufnimmt,
**dadurch gekennzeichnet, dass** der Zugschaft (5) über weite Bereiche seiner Längserstreckung durch den Grundkörper (6) gebildet wird, wobei der Grundkörper (6) zumindest im Wesentlichen aus einem zylinderförmigen Vollkörper mit einem Durchmesser d₁ gebildet ist, wobei zum Aufweiten der Fließformniethülse (1) im ersten Randbereich (3) der Grundkörper (6) an einem Ende von der Zylinderform in eine konusartige Aufweitung mit einem Durchmesser d₂ übergeht, und
wobei sich an diesen Bereich mit der konusartigen Aufweitung eine Sollbruchstelle (8) anschließt, welche den Grundkörper (6) mittels einer Einschnürung von dem Kopf (7) des Zugschaftes (5) abgrenzt.

6. Fügeelement nach Anspruch 5,
**dadurch gekennzeichnet, dass**
der Grundkörper (6) des Zugschafts (5) wenigstens ein Formschlusselement (23) aufweist, über welches das Umformwerkzeug (14), mittels welchem die Relativbewegung (13) des Zugschafts (5) zu der Fließformniethülse (1) bewirkbar ist, zumindest beim Bewirken der Relativbewegung in formschlüssiges Zusammenwirken mit dem Zugschaft (5) bringbar ist.

7. Fügeelement nach Anspruch 5 oder 6,
**dadurch gekennzeichnet, dass**
das Formschlusselement (23) als Aufnahme ausgebildet ist, in welcher zumindest ein korrespondierendes, weiteres Formschlusselement (15) des Umformwerkzeugs (14) zumindest teilweise aufnehmbar ist.

8. Fügeelement nach Anspruch 7,
**dadurch gekennzeichnet, dass**
sich die Aufnahme in Umfangsrichtung des Grundkörpers (6) vollständig umlaufend erstreckt.

## Claims

1. A method for joining at least two components (9, 10), in particular two sheet components of a vehicle body, by means of a flow-formed rivet sleeve (1) comprising a cladding region (2), a first edge region (3), and a second edge region (4), into which a traction shaft (5) comprising a base body (6) and a head (7) is introduced and which is inserted into respective through openings (11, 12) of the components (9, 10), which are at least substantially aligned with one another, whereafter, by means of a relative movement (13) of the traction shaft (5) to the flow-formed rivet sleeve (1), the latter is widened in the first edge region (3) and is brought into abutment against a component (9),
wherein the second edge region (4) is bent towards the other component (10) by means of a deforming tool (14) surrounding the traction shaft (5) and is brought into abutment against the other component (10),
wherein the head (7) of the traction shaft (5) has at least one recess (22), which receives material of the flow-formed rivet sleeve (1) displaced during the joining,
**characterized in that** a traction shaft (5) is used, which, over wide regions of its longitudinal extension, has the base body (6), which is formed at least substantially of a cylindrical solid body with a diameter d₁, wherein, for widening the flow-formed rivet sleeve (1) in the first edge region (3), the base body (6) merges at one end from the cylinder shape into a conical widening with a diameter d₂, and
wherein a predetermined breaking point (8), which limits the base body (6) by means of a constriction from the head (7) of the traction shaft (5), adjoins this region with the conical widening.

2. The method according to claim 1,
**characterized in that**
the base body (6) of the traction shaft (5) has at least one positive locking element (23), via which the deforming tool (14), by means of which the relative movement (13) of the traction shaft (5) to the flow-formed rivet sleeve (1) is effected, cooperates in a positive manner with the traction shaft (5) at least when effecting the relative movement.

3. The method according to any one of the preceding claims,
**characterized in that**
respective diameters of the edge regions (3, 4) are increased during the relative movement (13).

4. The method according to any one of the preceding claims,
**characterized in that**
the cladding region (2) is formed conically and is deformed cylindrically as a result of the relative movement (13).

5. A joining element for joining at least two components (, 10), in particular two sheet components of a vehicle body, comprising a flow-formed rivet sleeve (1), which has a cladding region (2), a first edge region (3), and a second edge region (4), and comprising a traction shaft (5), which is introduced into the flow-formed rivet sleeve (1) and comprises a base body (6) and a head (7), wherein the flow-formed rivet sleeve (1) can be inserted into respective through openings (11, 12) of the components (9, 10), which are at least substantially aligned with one another, whereafter, by means of a relative movement (13) of the traction shaft (5) to the flow-formed rivet sleeve (1), the latter can be widened in the first edge region (3) and can be applied to a component (9),
wherein the second edge region (4) can be bent towards the other component (10) by means of a deforming tool (14) surrounding the traction shaft (5) and can be applied to the other component (10),
**characterized in that** the head (7) of the traction shaft (5) has at least one recess (22), which is formed in such a way that it receives material of the flow-formed rivet sleeve (1) displaced during the joining,
**characterized in that** the traction shaft (5) is formed by the base body (6) over wide regions of its longitudinal extension, wherein the base body (6) is formed at least substantially of a cylindrical solid body with a diameter d₁, wherein, for widening the flow-formed rivet sleeve (1) in the first edge region (3), the base body (6) merges at one end from the cylinder shape into a conical widening with a diameter d₂, and
wherein a predetermined breaking point (8), which limits the base body (6) by means of a constriction from the head (7) of the traction shaft (5), adjoins this region with the conical widening.

6. The joining element according to claim 5,
**characterized in that**
the base body (6) of the traction shaft (5) has at least one positive locking element (23), via which the deforming tool (14), by means of which the relative movement (13) of the traction shaft (5) to the flow-formed rivet sleeve (1) can be effected, can be brought into positive cooperation with the traction shaft (5) at least when effecting the relative movement.

7. The joining element according to claim 5 or 6,
**characterized in that**
the positive locking element (23) is formed as receptacle, in which at least one corresponding, further positive locking element (15) of the deforming tool (14) can be received at least partially.

8. The joining element according to claim 7,
**characterized in that**
the receptacle extends completely circumferentially in the circumferential direction of the base body (6).

## Revendications

1. Procédé d'assemblage d'au moins deux éléments de construction (9, 10), en particulier deux pièces en tôle d'une carrosserie de véhicule, au moyen d'un manchon de rivetage fluotourné (1) comprenant une zone d'enveloppe (2), une première zone de bord (3) et une deuxième zone de bord (4), dans lequel est introduit une queue de traction (5) comprenant un corps de base (6) et une tête (7) et qui est inséré dans des orifices de passage (11, 12) respectifs des éléments de construction (9, 10), qui sont au moins essentiellement alignés l'une avec l'autre, à la suite de quoi, par un mouvement relatif (13) de la queue de traction (5) par rapport au manchon de rivetage fluotourné (1), celui-ci est élargi dans la première zone de bord (3) et mis en contact avec un élément de construction (9),
la deuxième zone de bord (4) étant recourbée vers l'autre élément de construction (10) au moyen d'un outil de formage (14), entourant la queue de traction (5), et étant mise en contact avec l'autre élément de construction (10),
la tête (7) de la queue de traction (5) présentant au moins un évidement (22) qui reçoit le matériau du manchon de rivetage fluotourné (1), déplacé lors de l'assemblage, **caractérisé en ce que** l'on utilise une queue de traction (5) qui présente, sur de larges zones de son extension longitudinale, le corps de base (6) qui est formé au moins essentiellement d'un corps plein cylindrique d'un diamètre d₁, le corps de base (6) passant, à une extrémité de la forme cylindrique, à un élargissement conique d'un diamètre d₂ pour l'élargissement du manchon de rivetage fluotourné (1) dans la première zone de bord (3), et un point de rupture (8) se raccordant à cette zone avec l'élargissement conique, lequel délimite le corps de base (6) de la tête (7) de la queue de traction (5) au moyen d'un rétrécissement.

2. Procédé selon la revendication 1,
**caractérisé en ce que**
le corps de base (6) de la queue de traction (5) présente au moins un élément de fermeture de forme (23), par lequel l'outil de formage (14), au moyen duquel le mouvement relatif (13) de la queue de traction (5) par rapport au manchon de rivetage fluotourné (1) est exécuté, interagit par complémentarité de forme avec la queue de traction (5) au moins lors de l'exécution du mouvement relatif.

3. Procédé selon l'une des revendications précédentes,
**caractérisé en ce que**
les diamètres respectifs des zones de bord (3, 4) sont augmentés lors du mouvement relatif (13).

4. Procédé selon l'une des revendications précédentes,
**caractérisé en ce que**
la zone d'enveloppe (2) est de forme conique et est façonnée de manière cylindrique suite au mouvement relatif (13).

5. Élément d'assemblage pour l'assemblage d'au moins deux éléments de construction (9, 10), en particulier deux pièces en tôle d'une carrosserie de véhicule, au moyen d'un manchon de rivetage fluotourné (1) comprenant une zone d'enveloppe (2), une première zone de bord (3) et une deuxième zone de bord (4), et d'une queue de traction (5) introduite dans le manchon de rivetage fluotouré (1) et comprenant un corps de base (6) et une tête (7), le manchon de rivetage fluotourné (1) pouvant être inséré dans des orifices de passage (11, 12) respectifs des éléments de construction (9, 10), qui sont au moins essentiellement alignés l'un avec l'autre, à la suite de quoi, par un mouvement relatif (13) de la queue de traction (5) par rapport au manchon de rivetage fluotourné (1), celui-ci peut être élargi dans la première zone de bord (3) et appliqué sur un élément de construction (9),
la deuxième zone de bord (4) pouvant être recourbée vers l'autre élément de construction (10) au moyen d'un outil de formage (14) entourant la queue de traction (5), et appliquée à l'autre élément de construction (10), **caractérisé en ce que** la tête (7) de la queue de traction (5) présente au moins un évidement (22) qui est conçu de manière à recevoir le matériau du manchon de rivetage fluotourné (1), déplacé lors de l'assemblage, **caractérisé en ce que** la queue de traction (5) est formée, sur de larges zones de son extension longitudinale, par le corps de base (6), le corps de base (6) étant formé au moins essentiellement d'un corps plein cylindrique d'un diamètre d₁, le corps de base (6) passant, à une extrémité de la forme cylindrique, à un élargissement conique d'un diamètre d2 pour l'élargissement du manchon de rivetage fluotourné (1) dans la première zone de bord (3), et un point de rupture (8) se raccordant à cette zone avec l'élargissement conique, lequel délimite le corps de base (6) de la tête (7) de la queue de traction (5) au moyen d'un rétrécissement.

6. Élément d'assemblage selon la revendication 5,
**caractérisé en ce que**
le corps de base (6) de la queue de traction (5) présente au moins un élément de fermeture de forme (23), par lequel l'outil de formage (14), au moyen duquel le mouvement relatif (13) de la queue de traction (5) par rapport au manchon de rivetage fluotourné (1) est exécuté, peut être amené à interagir par complémentarité de forme avec la queue de traction (5) au moins lors de l'exécution du mouvement relatif.

7. Élément d'assemblage selon la revendication 5 ou 6,
**caractérisé en ce que**
l'élément de fermeture de forme (23) est conçu comme logement dans lequel au moins un autre élément de fermeture de forme (23) correspondant de l'outil de formage (14) peut être contenu au moins partiellement.

8. Élément d'assemblage selon la revendication 7,
**caractérisé en ce que**
le logement s'étend sur tout le pourtour du corps de base (6) dans le sens de la circonférence.
